# EUROPÄISCHE PATENTANMELDUNG

(11) **EP 1 172 281 A1**
(43) Veröffentlichungstag der Anmeldung: **16.01.2002**
(21) Anmeldenummer: 00115298.2
(22) Anmeldetag: 14.07.2000
(51) Int. Cl.: B62D 25/04

(54) **A-Säulengestaltung eines Personenkraftwagens und Verfahren zur Herstellung einer A-Säule**

(71) Anmelder: BENTELER AG, D-33104 Paderborn (DE)
(72) Erfinder: Gehringhoff, Ludger, 33106 Paderborn (DE); Wecker, Ferdinand, 33104 Paderborn (DE); Harbarth, Thomas, 33102 Paderborn (DE); Wulfes, Dieter.W, 33178 Borchen (DE)
(74) Vertreter: Bockermann, Rolf, Dipl.-Ing.

(57) **Zusammenfassung**

Die A-Säule (2) eines Personenkraftwagens (PKW) umfasst eine im Querschnitt mehreckige, in Längsrichtung gekrümmte Basisstruktur (3) mit gerundeten Längskanten (6) sowie mit einem Längsflansch (4) für eine Türdichtung (9) und eine mit der Basisstruktur (3) gefügte, die Ästhetik des PKW's mit bestimmende Beplankung (5). Die Basisstruktur (3) ist zusammen mit dem Längsflansch (4) einteilig gestaltet und durch stufenweises mechanisches bzw. hydraulisches Umformen einer aus einem Stahlblech abgeteilten Platine gebildet.

## Beschreibung

Die Erfindung betrifft einerseits die A-Säulengestaltung eines Personenkraftwagens (PKW) gemäß den Merkmalen im Oberbegriff des Patentanspruchs 1 und andererseits ein Verfahren zur Herstellung einer A-Säule entsprechend dem Oberbegriff des Patentanspruchs 2.

Die Basisstruktur der A-Säule eines PKW's besteht bislang aus zwei länglichen Schalen mit jeweils zwei quer abstehenden Fügeflanschen. Eine Schale besitzt einen etwa dreieckigen Querschnitt, während die andere Schale im Querschnitt trapezförmig gestaltet ist. Zur Bildung der Basisstruktur werden die Fügeflansche der beiden Schalen aufeinander gelegt und dann, insbesondere durch Punktschweißung, miteinander verbunden. Auf diese Weise weist die Basisstruktur zwei zueinander diametrale Längsflansche auf, von denen ein 1. Längsflansch sowohl der Fixierung einer die Ästhetik des PKW's mit bestimmenden Beplankung als auch der Festlegung einer im Querschnitt etwa U-förmigen elastischen Türdichtung dient.

Dieser Bauart einer Basisstruktur einer A-Säule haftet aufgrund des dem 1. Längsflansch mit der Türdichtung gegenüberliegenden 2. Längsflansches der Nachteil an, dass sie einen vergleichsweise großen Einbauraum benötigt. Auch werden durch den 2. Längsflansch der notwendige Einbauraum und damit die Sichtbedingungen, insbesondere für den Fahrer eines PKW's, eingeschränkt.

Des Weiteren wird durch die Bildung des 2. Längsflansches aus den Fügeflanschen der beiden Schalen auch bei größter Sorgfalt eine Schwachstelle geschaffen, die hinsichtlich ihrer Belastbarkeit zwangsläufig begrenzt ist.

Der Erfindung liegt ausgehend vom Stand der Technik die Aufgabe zugrunde, eine A-Säulengestaltung eines PKW's sowie ein Verfahren zur Herstellung einer A-Säule zu schaffen, die unter Gewichtsreduzierung bei verbesserten Sichtbedingungen, insbesondere für den Fahrer eines PKW's, zu einem geringeren Einbauraum führen und dennoch eine höhere Belastbarkeit ermöglichen.

Die Lösung dieser Aufgabe besteht hinsichtlich des gegenständlichen Teils der Erfindung in den kennzeichnenden Merkmalen des Patentanspruchs 1.

Der verfahrensmäßige Teil der Lösung wird in den kennzeichnenden Merkmalen des Patentanspruchs 2 erblickt.

Einen Kernpunkt der Erfindung bildet der Sachverhalt, dass die Basisstruktur einteilig ausgebildet ist und nur noch einen Längsflansch zur Fixierung der Türdichtung aufweist. Dabei bildet der Längsflansch einen einstückigen Bestandteil der Basisstruktur. Aufgrund der einteiligen Gestaltung der Basisstruktur mit nur einem Längsflansch entfällt nicht nur der bislang störende 2. Längsflansch, sondern es wird auch eine erhebliche Reduzierung der Anzahl der Bauteile für die gesamte A-Säule erzielt. Statt bislang drei Bauteilen (zwei Schalen und die Beplankung) wird die A-Säule nur noch auf zwei Bauteile reduziert, nämlich auf die einteilige Basisstruktur mit dem Längsflansch und auf die mit dieser gefügte Beplankung. Folglich wird die A-Säule insgesamt schlanker. Ihr Gewicht wird reduziert. Sie hat außerdem einen kleineren Querschnitt, so dass die Sichtverhältnisse, insbesondere für den Fahrer eines PKW's, deutlich verbessert werden. Durch den Wegfall des 2. Längsflansches wird auch die dadurch bedingte Schwachstelle beseitigt, so dass die A-Säule insgesamt steifer wird.

Im Hinblick auf den Sachverhalt, dass die Basisstruktur aus einer konturierten Platine in mehreren Stufen durch mechanisches und hydraulisches Umformen hergestellt wird, können für die Basisstruktur sehr enge Fertigungstoleranzen eingehalten werden. Das Crashverhalten eines PKW's mit solchen A-Säulen wird bei gleichzeitiger Gewichtsreduzierung deutlich optimiert.

Ein weiterer Vorteil der Erfindung wird darin erblickt, dass die Platine zur Fertigung der Basisstruktur jetzt auch aus vorbeschichtetem stählernen Coilmaterial bereitgestellt werden kann. Dies fördert die Langlebigkeit sowie die Korrosionsbeständigkeit des in Rede stehenden Produkts.

Das Fügen der beiden Schenkel des Längsflansches kann durch Punkt-, Laser- oder Plasmaschweißen erfolgen.

Die Erfindung ist nachfolgend anhand eines in den Zeichnungen veranschaulichten Ausführungsbeispiels näher erläutert. Es zeigen:
- Figur 1: in schematischer Perspektive die Karosserie eines Personenkraftwagens;
- Figur 2: in vergrößertem Maßstab einen Schnitt durch eine A-Säule der Karosserie der Figur 1 entlang der Linie II-II in Richtung des Pfeils lla gesehen;
- Figur 3: in der Draufsicht eine Platine zur Herstellung einer Basisstruktur für eine A-Säule und
- Figuren 4 bis 9: teils in der Perspektive, teils im Querschnitt verschiedene Stufen während der Fertigung der Basisstruktur.

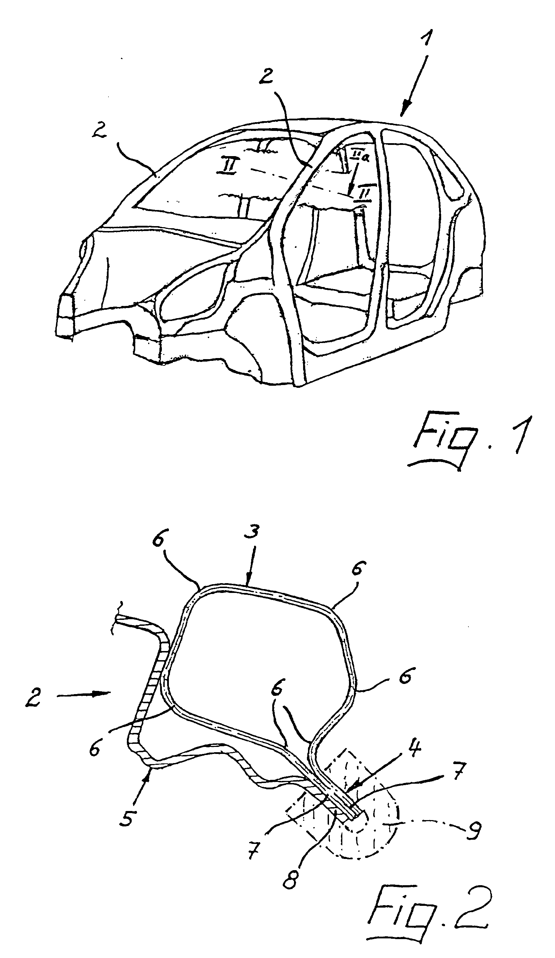

Mit 1 ist in der Figur 1 schematisch die Karosserie eines Personenkraftwagens (PKW's) veranschaulicht. Die beiden A-Säulen 2 der Karosserie 1 haben einen Querschnitt, wie er in der Figur 2 im Schema veranschaulicht ist. Jede A-Säule 2 setzt sich hierbei aus einer im Querschnitt mehreckigen, rohrförmigen Basisstruktur 3 mit einem Längsflansch 4 sowie einer die Ästhetik des PKW's mit bestimmenden konfigurierten äußeren Beplankung 5 zusammen. Beplankung 5 und Basisstruktur 3 werden durch Punktschweißung verbunden.

Die Längskanten 6 der Basisstruktur 3 sind gekrümmt. Der Längsflansch 4 wird durch zwei Schenkel 7 gebildet, die in paralleler Ausrichtung durch Punktschweißen miteinander und mit einem Schenkel 8 der Beplankung 5 gefügt werden. Der aus den Schenkeln 7, 8 der Basisstruktur 3 und der Beplankung 5 bestehende Bauteil dient, wie in Figur 2 in strichpunktierter Linienführung angegeben, letztlich der Festlegung einer elastischen Türdichtung 9.

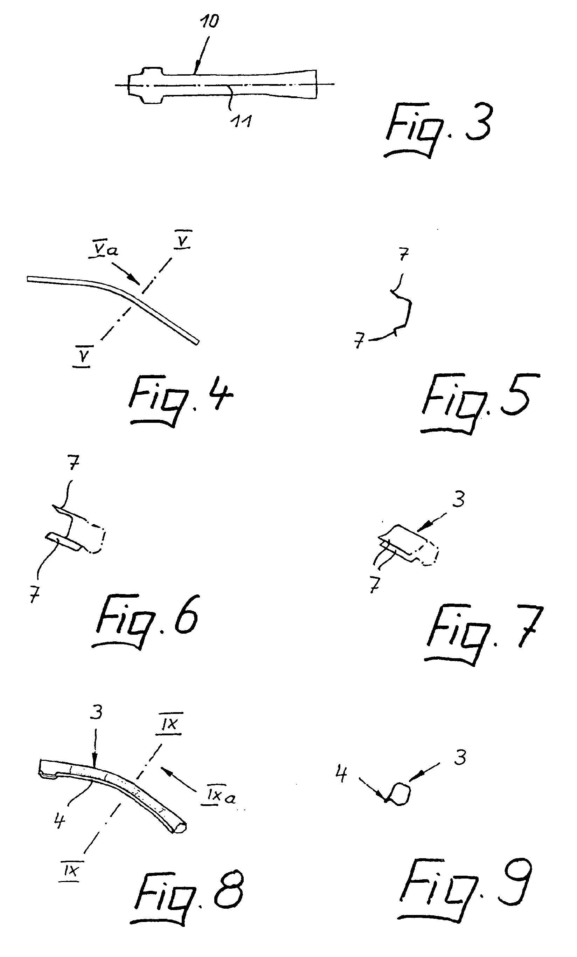

Die Fertigung der Basisstruktur 3 der A-Säule 2 erfolgt bevorzugt in mehreren Stufen und wird nachfolgend anhand der Figuren 3 bis 9 näher erläutert.

Zunächst wird von einem nicht näher veranschaulichten, gegebenenfalls vorbeschichteten stählernen Coilmaterial gemäß Figur 3 eine in der Kontur kreuzförmige Platine 10 abgeteilt. Diese Platine 10 wird anschließend in einem ersten Umformschritt rein mechanisch in ihrer Längserstreckung entsprechend der gewünschten, aus Figur 8 erkennbaren Form gebogen (Figur 4) und zugleich um ihre Längsachse 11 schalenartig gekrümmt (Figuren 5 und 6).

Hierbei werden bereits die Schenkel 7 des Längsflansches 4 erzeugt.

Entsprechend der Figur 7 wird dann in einem weiteren Umformschritt die Basisstruktur 3 aus der schalenförmigen Gestaltung gemäß den Figuren 5 und 6 in eine nahezu geschlossene rohrartige Gestaltung geformt, bei welcher die beiden Schenkel 7 des Längsflansches 4 knapp nebeneinander liegen.

Diese bis dahin rein mechanisch umgeformte Basisstruktur 3 wird anschließend in einem nicht näher veranschaulichten Hydrowerkzeug mittels hydraulischem Innenhochdruck zu der Basisstruktur 3 gemäß den Figuren 8 und 9 umgeformt, wobei die beiden Schenkel 7 des Längsflansches 4 aneinander gepresst werden.

Die Basisstruktur 3 hat nunmehr ihre Endform und kann über die Schenkel 7 des Längsflansches 4 zumindest teilweise geschlossen und anschließend mit der Beplankung 5 gefügt werden.

### Bezugszeichenaufstellung

- 1 -: Karosserie
- 2 -: A-Säulen
- 3 -: Basisstruktur v. 2
- 4 -: Längsflansch v. 3
- 5 -: Beplankung v. 2
- 6 -: gekrümmte Längskanten v. 3
- 7 -: Schenkel v. 4
- 8 -: Schenkel v. 5
- 9 -: Türdichtung
- 10 -: Platine
- 11 -: Längsachse v. 10

## Patentansprüche

1. A-Säulengestaltung eines Personenkraftwagens (PKW), welche eine im Querschnitt mehreckige, in Längsrichtung gekrümmte Basisstruktur (3) mit gerundeten Längskanten (6) sowie mit einem Längsflansch (4) für eine Türdichtung (9) und eine mit der Basisstruktur (3) gefügte, die Ästhetik des PKW's mit bestimmende Beplankung (5) umfasst, **dadurch gekennzeichnet, dass** die Basisstruktur (3) zusammen mit dem Längsflansch (4) einteilig gestaltet und durch stufenweises mechanisches bzw. hydraulisches Umformen einer aus einem Stahlblech abgeteilten Platine (10) gebildet ist.

2. Verfahren zur Herstellung einer A-Säule (2) für einen Personenkraftwagen (PKW), **dadurch gekennzeichnet, dass** zunächst von einem stählernen Coilmaterial eine Platine (10) abgeteilt und die Platine (10) anschließend in mehreren Stufen unter Ausbildung eines zweischenkligen Längsflansches (4) um ihre Längsachse (11) zu einer in ihrer Längserstreckung bogenförmigen Basisstruktur (3) gekrümmt wird, worauf die Basisstruktur (3) mit hydraulischem Innenhochdruck in die Endform gebracht, dann die Schenkel (7) des Längsflansches (4) in paralleler Ausrichtung gefügt und letztlich die Basisstruktur (3) mit einer Beplankung (5) verbunden werden.
